# EUROPEAN PATENT SPECIFICATION

(11) **EP 2 766 313 B1**
(45) Date of publication and mention of the grant of the patent: **27.07.2016**
(21) Application number: 12829690.2
(22) Date of filing: 07.09.2012
(51) Int. Cl.: C02F 3/12, C02F 3/30, C02F 3/22, C02F 11/12, C02F 11/16

(54) **SMALL INSTALLATION FOR BIOLOGICAL WASTEWATER TREATMENT WITH IMPROVED EFFICIENCY**
KLEINKLÄRANLAGE ZUR BIOLOGISCHEN ABWASSERBEHANDLUNG MIT VERBESSERTEM WIRKUNGSGRAD
PETITE INSTALLATION DESTINÉE AU TRAITEMENT BIOLOGIQUE D'EAUX USÉES PRÉSENTANT UNE EFFICACITÉ ÉLEVÉE

(30) Priority: 08.09.2011 HU P1100492; 06.09.2012 HU P1200512
(43) Date of publication of application: 20.08.2014
(73) Proprietor: Schuster, Péter, 2500 Esztergom (HU); Krasznói, Anna, 2500 Esztergom (HU)
(72) Inventor: Schuster, Péter, 2500 Esztergom (HU); Krasznói, Anna, 2500 Esztergom (HU)
(74) Representative: Varga, Tamas Péter
(86) International application number: PCT/HU2012/000090
(87) International publication number: WO 2013/034942

(56) References cited:
- WO-A1-01/28935
- WO-A1-2007/022899
- JP-A- 2005 193 236
- KR-B1- 101 020 593
- RU-U1- 52 397
- US-A1- 2003 183 572
- US-A1- 2003 183 572

## Description

The subject of the invention is a small installation for biological wastewater treatment with improved efficiency, which ensures an uninterrupted working for 3-50 people with a low sludge load, which also allows the easy and simple separation and removal of the dry material content of the stable sludge after passing the stable sludge through a sludge bag located in the appropriate part of the small installation, or it allows the removal of the stable sludge easily from a given space of the small installation.

It is a very important requirement to ensure treatment of communal and industrial wastewater in the interest of protecting the environment. The efficient treatment of communal wastewater is primarily made at large sewage treatment plants after collecting the household wastewater from the settlements. Households usually have to treat their own generated wastewater in settlements where no collecting sewer networks and no associated sewage treatment plants are available. Small installations for biological sewage treatment are already commercially available, which are suitable for providing treating services for a small number of users. However, these small installations for biological wastewater treatment require rather extensive care from the user, and the collected sludge is to be removed from all the compartments of the small installation with a predetermined frequency.

The patent application No. WO 2007022899 makes known a sewage treatment plant, which works according to a modified activated sludge process having a continuous output and input. The plant comprises an activated sludge chamber, that connects the anaerobic and anoxic areas not exposed to air with oxic areas that are exposed to air, a secondary settling chamber, that has an internal recycling system, which is installed in a tank between the activated sludge chamber and the secondary settling tank. The tank has a foundation, an external cover, an activated sludge chamber which is exposed to air, a holding chamber, and it is divided in vertical direction into a compartments system which is not exposed to air. The said compartment system is separated from the sludge chamber exposed to air by means of a separation wall, which extends from the foundation above the maximum level, which is determined by the location of the overflow valve. Furthermore, the subject of the invention has an opening in the foundation of the tank or at a minimum level, which is determined by the location of the outlet opening.

The patent application US2003183572 makes known activated sludge method and device for the treatment of effluent with nitrogen and phosphorus removal. The invention relates to a device and method for the treatment of effluent with activated sludge in suspension, for the removal of nitrogen and phosphorus and for simultaneous sludge stabilisation. An activated chamber is provided with a fermentation zone, a denitrification zone and a nitrification zone, whereby the fermentation zone and the denitrification zone in the activated chamber, are separated by scum boards and overflow barriers in the direction of flow, giving rise to ascending flow and descending flow chambers in the anaerobic fermentation zone and the denitrification zone. The residence time and concentration of the activated sludge in the anaerobic fermentation zone, the denitrification zone, the nitrification zone and the settling tank may be controlled by means of changes to the intensity of recirculation of the effluent-sludge mixture in the anaerobic fermentation zone and recirculation of the recycled sludge to the denitrification zone, or by changing the continuous and short-term, intermittent operation of the recirculation within predetermined time intervals, to follow fixed temporal sequences (corresponding to the given daily variations in effluent amount and loading).

The patent application KR101020593 makes known aeration apparatus and waste water treating method using the apparatus. A waste water disposal apparatus equipped with a T-shaped aeration unit and a waste water disposal method eliminating nitrogen-phosphorus using the same are provided to secure dominant microorganism by transferring organic waste into sludge concentrating bath. A anaerobic bath, a flow adjusting bath, a first suspension biological membrane reaction bath, a second suspension biological membrane reaction bath, precipitation baths, an aeration bath, a T-shaped aeration unit, a sludge concentrating bath, and a disposal bath are prepared. The T-shaped aeration unit is composed of a water current moving pipe, an air injecting pipe, a first erectly standing pipe, a second erectly standing pipe, and an upper fixing plate. The air injecting pipe supplies air by being in connection with the water current moving pipe. The upper fixing plate hermetically seals the second erectly standing pipe.

The patent application JP2005193236 makes known waste water treatment apparatus and method therefore. To provide a waste water treatment apparatus, excellent in the operability without depending on the skill or intuition of an operator, and also excellent in the stability of treated water quality by grasping conditions in a reaction tank in detail and executing control according to the conditions to easily obtain stable treated water. The waste water treatment apparatus having the reaction tank 6 in which the waste water is nitrified and denitrified via a biological treatment, comprises a fluorescence sensor disposed in the reaction tank for measuring the fluorescence amount of a biophosphor, a pH sensor for measuring a pH value, a dissolved oxygen meter for measuring dissolved oxygen concentration, an oxygen supplying section for supplying oxygen to the reaction tank, a reaction-stagedeciding section for deciding the reaction stage of the waste water nitrification and denitrificaion based on the pH variation and the dissolved oxygen amount in a prescribed time calculated using the pH value as well as the fluorescence amount variation in a prescribed time calculated using the fluorescence amount,; and a controlling section for controlling the oxygen supplying section according to the reaction-stage-deciding section.

The solutions described above and used in practice have the disadvantage that the sludge load of the plant is uneven, therefore, it is necessary to take samples at given intervals from the aerobe space in case of these solutions, and the ratio of water and sludge is to be determined with the help of measuring the settling, and the sludge is to be pumped out of the system according to the regulations. A further disadvantage is that the sludge is to be pumped out of more than one tanks in case of these solutions.

When designing the small installation for biological wastewater treatment our aim was to create a small plant, by which we can improve the sewage treatment efficiency of the system, the operation of which is automatic depending on its use, maintenance and discharge of sludge, where the removal of sludge is simple, further allowing in the given case that the dry material content could be separated and removed from the small installation easily, and having the further objective to establish beneficial static properties for the small installation.

While creating the solution according to the invention we realised, that if a small installation for biological wastewater treatment is prepared comprising of an anaerobic space, an anoxic space, an aerobe space having air blower giving micro air bubbles, a post settling space, a sludge thickener space and sludge tank(s), a sludge precipitation space which is provided with sludge bags, as well as connecting passages among the spaces, outlets, airlift pumps, with the insertion of lower and upper overflow weirs, with which a small installation for biological wastewater treatment is made, the operation of which is controlled by circulating the sewage water within the small installation, so that it is passed from a space to the bottom of the subsequent space, and in case of anaerobic space the sewage water is passed from its bottom to the bottom of the anoxic space, and at the same time, a portion of the stable sludge is carried with appropriate control from the sludge thickener to the sludge tank located outside or inside the small installation, or passed also with appropriate control through sludge bag located within the small installation, and spaces of the small installation are allocated in a way that the walls separating the spaces ensure the static stability of the small installation themselves against earth pressure without the inclusion of bracing, then the set aim can be achieved.

The invention is a small installation for biological wastewater treatment with improved efficiency, comprising of an anaerobic space, an anoxic space, and aerobic space which is provided with micro-bubble air blower, a post settling space, a sludge thickener space, where passages, outlets, airlift pumps, lower and upper overflow weirs are located among these spaces. It is characterised by that, the wastewater to be purified arrives at the anaerobic space of the small installation in a gravitational way with upper inflow, and while the wastewater passes through the filter cage located in the upper part of the anaerobic space the granular parts of the wastewater are disintegrated with the help of the air provided by the airlift pump, which solid parts settle to the bottom of the anaerobic space, the wastewater flows from the anoxic space to the bottom of the aerobic space through symmetrically located passage pipes having upper inlet and lower outlet, where the wastewater moves upward in the section of the space which is saturated with the micro-bubbles produced by the micro-bubble air blower, and flows through the two inlet openings located symmetrically in the inclined walls and through the passage pipe having upper inlet and lower outlet, and having a triangular cross section as fitted to the two inclined walls of the post settling space, to the bottom of the post settling space, and in this post settling space the sludge with higher density settles, and the water fraction is situated above the sludge fraction, and the sludge is sucked out from the post settling space, so that the T fitting having a throttle on the outlet pipe that reaches into the post settling space, reduces the flow rate of the outlet water (to about 3 litre/min), as a result of which the height of the water column in the post settling space increases, and because of the increased pressure of the water column, the airlift pump delivers the water to the anaerobic space only in case of low quantity of water after branching in two directions on the surface, while in case of a larger quantity of water, sludgy water flows into the sludge thickener space after flowing over the sludge suction elbow which has an adjustable level and provides a higher overflow, and from the sludge thickener space it is carried to the sludge precipitation space with the help of the airlift pump working with maximum capacity (by changing over the air baffle) for about 15 minutes a day, provided that sufficient quantity of liquid sludge has accumulated, where the liquid part of the sludge is filtered through the permeable sludge bag and flows into the anaerobic space through the drip tray and the connected drip separator, and the dry content of the sludge is collected in sludge bag, where it starts to desiccate.

In the small installation according to the invention, the small installation having a circular base, its anaerobic space, anoxic space and sludge thickener space are established side by side, so that one vertical side wall for each of these three spaces is provided by a side wall, and the post settling space, having a perimeter shaped as equilateral triangle along its upper edges, is designed in a way, that its vertical wall is formed by the side wall, and each of the further two side plates are formed by a triangular inclined wall, and the aerobic space is aligned around the post settling space, so that the aerobic space is located next to the two sides of and below the post settling space.

In the small installation according to the invention, the sludge thickener space and the anoxic space of the small installation according to the invention are interconnected by an upper overflow opening, which makes sure that the water returns to the anoxic space through the upper overflow opening, when the airlift pump delivers too much sludge into the sludge thickener space because of the overloading of the small installation.

In the small installation according to the invention, in the design of the internal recirculation loop of the small installation there is an open pipe end at the uppermost point of the pipe of the airlift pump ensuring that the wastewater can return to the anoxic space from the aerobe space, and ensuring the air is let away.

In a prefered embodiment of the small installation according to the invention, the volumetric proportions of the spaces of the small installation are determined so that its 100 % volume consists of 7 % for the anaerobic space, 16.2 % for the anoxic space, 54.2 % for the aerobic space, 15.6 % for the post settling space, 7 % for the sludge thickener space, and therefore, a small installation designed for serving 6 people has the following volumes:
anaerobic space (2) = 0.1 m3, anoxic space (3) = 0.23 m3, aerobic space (4) = 0.77 m3, post settling space (5) = 0.22 m3, sludge thickener space (6) = 0.1 m3.

In a further prefered embodiment of the small installation according to the invention, the material of the small installation is plastic, preferably 6-8 mm thick polypropylene plate, which is welded with known plastic welding technology, and that its material can also be stainless steel or polyester.

In a further prefered embodiment of the small installation according to the invention, a portion of the stable sludge is removed on a regular basis, as a result of which the sludge load of the system is significantly lower, and the micro-bubble air blower required in the aerobic space can have a smaller capacity.

In a further prefered embodiment of the small installation according to the invention, the sludge tank can be located outside the small installation also in its immediate vicinity, if required.

In a further prefered embodiment of the small installation according to the invention, the small installation has a capacity to serve 3-50 users by purifying sanitary wastewater coming from family house, hotels, and public institutions.

In a further prefered embodiment of the small installation according to the invention, the material of the sludge bag is water permeable material, preferably woven polypropylene, woven jute, preferably made of decomposable material.

The solution according to the invention is set forth on the basis of the attached figures:
Fig. 1 shows the top view of a possible small installation outside of the scope of the invention.
Fig. 2 shows the operating flow chart of the embodiment shown in Fig 1. of the small installation outside of the scope of the invention.
In Fig. 3 we depicted the passages, flow directions and airlift pumps, that are used in case of the embodiment shown in Fig. 1 of the small installation outside of the scope of the invention.
Fig. 4 shows a possible embodiment of the small installation outside of the scope of the invention, where it is connected to a composting plant.
Fig. 5 shows the top view of a preferred embodiment of the small installation according to the invention.
Fig. 6 shows the operating flow chart of the embodiments of the small installation shown in Fig. 5.
Fig. 7 shows the embodiment according to Fig. 5 of the small installation together with the applied passages, flow directions and airlift pumps.
Fig. 8 shows the embodiment of the small installation as shown in Fig. 5, when external sludge tank is used.
Fig. 9 shows a detail of the anaerobic space of the small installation according to the invention.
Fig. 10 shows a portion of the flow chart of the embodiment of the small installation shown in Fig. 5 in case of the basic operating mode of the small installation when no wastewater is being supplied.
Fig. 11 shows a detail of the flow chart of the embodiment shown in Fig. 5 of the small installation according to the invention in case of the basic operating mode of the small installation, when wastewater is being supplied.
Fig. 12 shows a detail of the embodiment shown in Fig. 5 of the small installation according to the invention, when the small installation is in the sludge removal mode.
Fig. 13 shows the operation of the sludge bag applied in the small installation according to the invention with a side view.
   The internal circulating loop of the small installation according to Fig. 5 is shown in Fig. 14.
Fig. 15 shows the comparative sludge load functions of the small installation according to the invention and the traditional small biological sewage treatment plants.

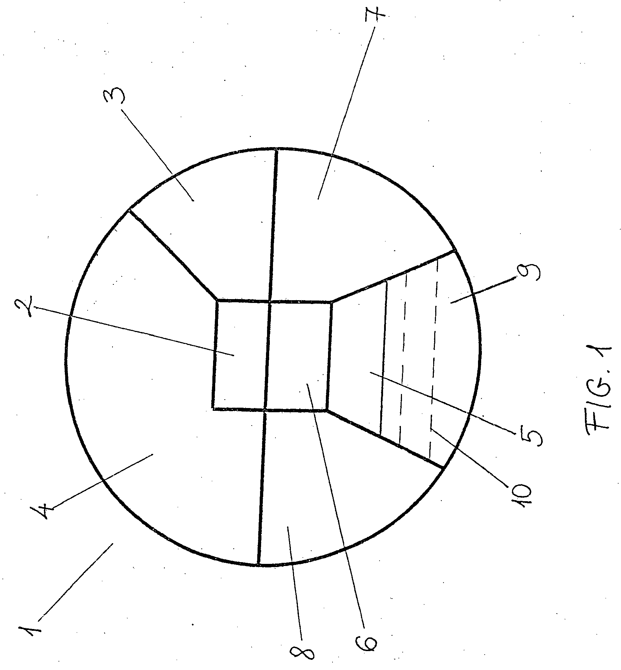

Fig. 1 shows the top view of a possible preferred embodiment of the small installation 1 outside of the scope of the invention. The anaerobic space 2 having a rectangular base can be seen in the figure, which is formed at the middle part of the small installation 1 having circular base, together with its sludge thickener space 6 that has a rectangular base also. The figure also shows the anoxic space 3, having a base shaped as broken sector, of the small installation 1, as well as the aerobic space 4 having a base shaped as broken sector, and the sludge tanks 7, 8 having a base shaped as broken sector too, and the post settling space 5 established at the part between the sludge tanks 7,8. The post settling space 5 has an inclined wall 9, and a connecting passage 10 is installed in the space below the inclined wall 9, which interconnects the sludge tanks 7, 8.

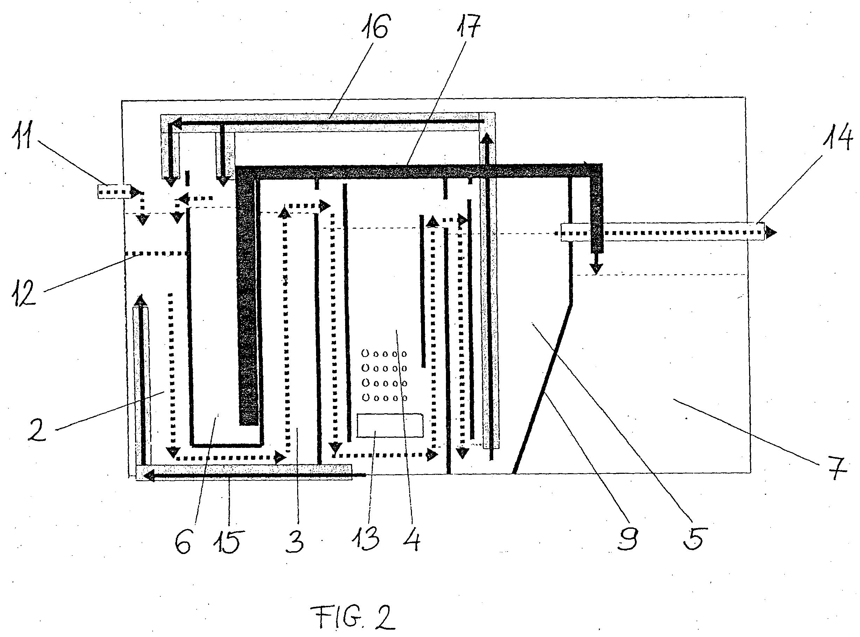

Fig. 2 shows the operating flow chart of the embodiment shown in Fig 1. of the small installation 1 outside of the scope of the invention. As can be seen in the flow chart, the sewage water to be purified arrives with gravitational flow at the anaerobic space 2 of the small plant 1 through the inlet 11 located at the top. While the sewage water flows through the filter cage 12 located in the upper section of the anaerobic space 2, the solid parts gets disintegrated and settled, and then the sewage water flows from the bottom anaerobic space 2 to the bottom of the anoxic space 3. From the anoxic space 3 the sewage water flows to the bottom of aerobic space 4 after flowing through the upper passage and the lower outlet. As can be seen in the figure, there is a micro-bubble air blower 13 at the lower part of the aerobic space 4, from which micro bubbles are released that move upward.

From the bottom of the aerobic space 4 the wastewater moves upwards in the space saturated with micro bubbles, and then it flows through the upper passage and lower outlet to the bottom of the post settling space 5 formed by the inclined wall 9, where the solid fraction of the sewage water settles as a sludge, and its water fraction is situated above the sludge fraction. A portion of the sludge is transferred from the post settling space 5 with the help of airlift pump 16 to the anaerobic space 2 and the sludge thickener space 6.

It is well visible in the flow chart, that a controlled portion of water is discharged from the post settling space 5 through the purifier outlet 14. From the sludge thickener space 6 the sludge is forwarded to the sludge tank 7, 8 with the help of an airlift pump 17, which is provided with adjustable control, and from here the sludge is discharged at predetermined intervals.

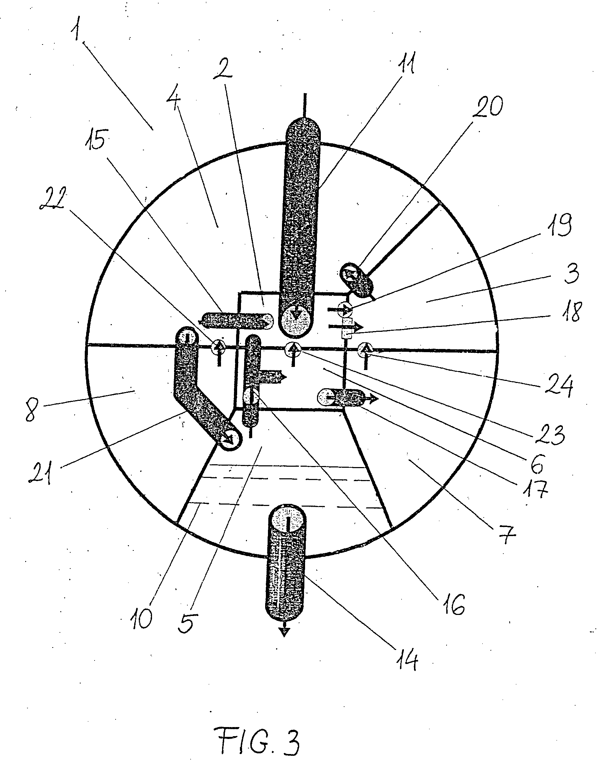

In Fig. 3 we depicted the passages, flow directions and airlift pumps, that are used in case of the embodiment shown in Fig. 1 of the small installation 1 outside of the scope of the invention. The figure shows the inlet 11 of the small installation 1, which directs the wastewater to be purified in a gravitational way from above into the anaerobic space 2, which is established at the middle of the small installation 1. A lower passage opening 18 is located between the anaerobic space 2 and the anoxic space 3, which directs the wastewater from the bottom of the anaerobic space 2 to the upper part of anoxic space 3, and there is an upper overflow opening 19, which makes sure that the wastewater can automatically flow over to the anoxic space 3 in case of overfilling the anaerobic space 2.

The agitation of the wastewater in the anaerobic space 2 is made by the airlift pump 15, which forwards the fluid from the aerobic space 4 to the anaerobic space 2. There is a passage pipe 20 with upper inlet and lower outlet between the anoxic space 3 and the aerobic space 4, which directs the wastewater from the top of the anoxic space 3 to the bottom of aerobic space 4. A passage pipe 21 with upper inlet and bottom outlet is located between the aerobic space 4 and the subsequently settling space 5, which directs the partially purified wastewater from the upper part of the aerobic space 4 to the bottom of the post settling space 5. There is an outlet 14 which directs the flow from the subsequently settling space 5 to the outside of the small installation 1.

An airlift pump 16 is located between the post settling space 5, sludge thickener space 6 and an anaerobic space 2, which forwards the sludge from the bottom of the post settling space 5 with upper outlet to the upper part of sludge thickener space 6 and the anaerobic space 2. An airlift pump 17 is located between the sludge thickener space 6 and the sludge tank 7, which transfers the already stable sludge from the bottom of the sludge thickener space 6 to the sludge tank 7 from above. The interconnection between the sludge tank 7 and the sludge tank 8 is ensured by the connecting passage 10. The overflow openings 22, 24 ensures that the surplus raw sludge flows over to the anoxic space 3 or to the aerobic space 4 from the sludge tanks in case of overfilling.

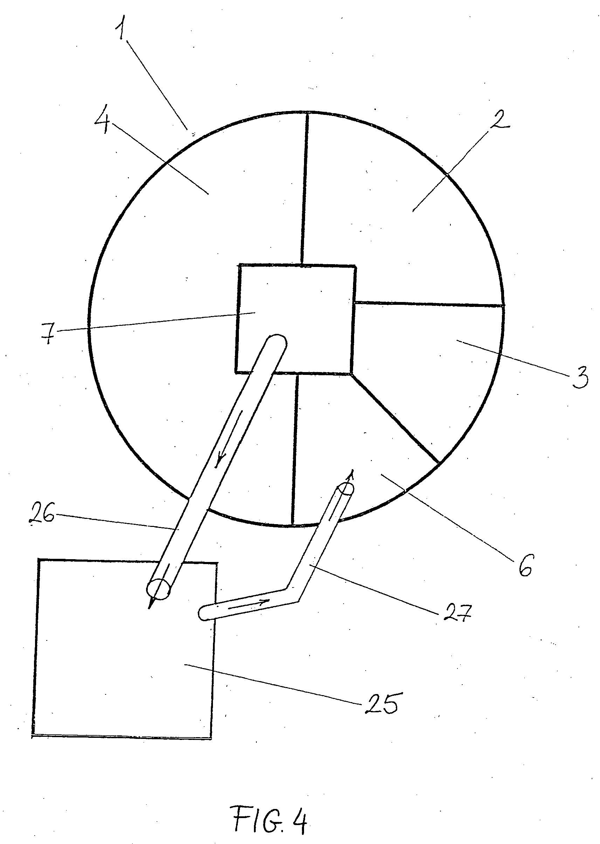

Fig. 4 shows a possible embodiment of the small installation 1 outside of the scope of the invention, where it is connected to a composting plant 25. The figure shows the small installation 1 with an anaerobic space 2, an anoxic space 3, an aerobic space 4, a sludge thickener space 6 and a sludge tank 7. In this case, a supplementary composting plant 25 is used next to the small installation 1. In this case, the stable sludge collected in the sludge tank 7 of the small installation 1 is transferred over to the compositing plant by means of a pump having appropriate control, into which other organic materials can also be placed.

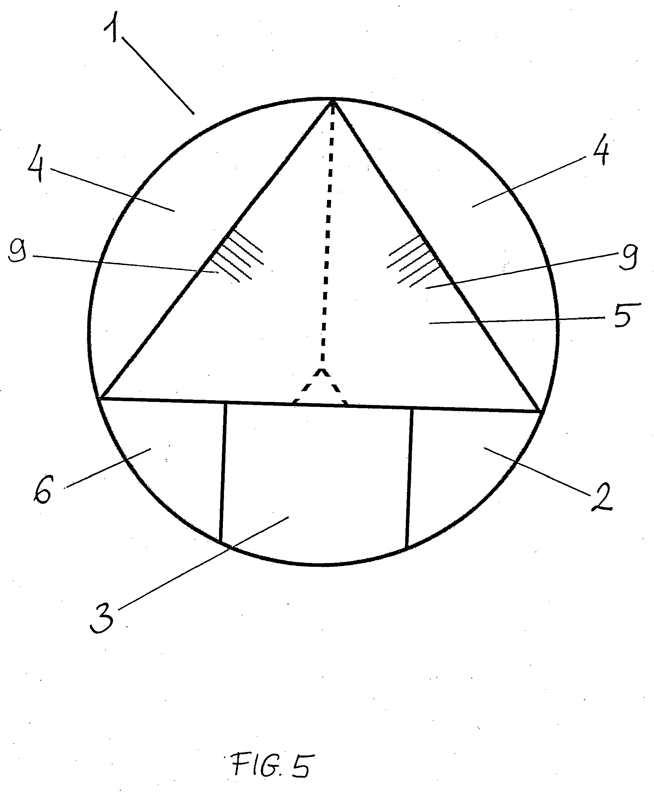

Fig. 5 shows the top view of a preferred embodiment of the small installation 1 according to the invention. The figure shows the small installation 1 having a circular base, in which its anaerobic space 2, its anoxic space 3 and its sludge thickener space 6, each having a shape of a broken segment, are located next to each other in a way, that one vertical side wall of each space part is formed by the side wall 36.

A post settling space 5 is established within the small installation 1 with circumference corresponding to an equilateral triangle along its upper edges, the vertical side wall of which is formed by the side wall 36. Each of the additional two side plates of the post settling space 5 is formed by an inclined wall 9 having triangular shape. An aerobic space 4 is formed within the small installation 1 in a manner, that the aerobic space 4 is located around the post settling space 5, i.e. next to it at two sides, and also below it as a result of the inclined wall 9 of the post settling space 5, because the post settling space 5 does not reach the bottom of the small installation 1.

It is possible that the static stability of the small installation against earth pressure is ensured by the separating walls of the spaces themselves without the use of bracing by properly allocating the spaces of the small installation 1 according to Fig. 5, as well as by properly designing the separating walls and the inclined walls 9. The proportions of the spaces of the small installation are designed so that the total 100 % volume of the small installation 1 consists of 7 % for the anaerobic space 2, 16.2 % for the anoxic space 3, 54.2 % for the aerobics space 4, 15.6% for the post settling space 5 and 7% for the sludge thickener space 6.

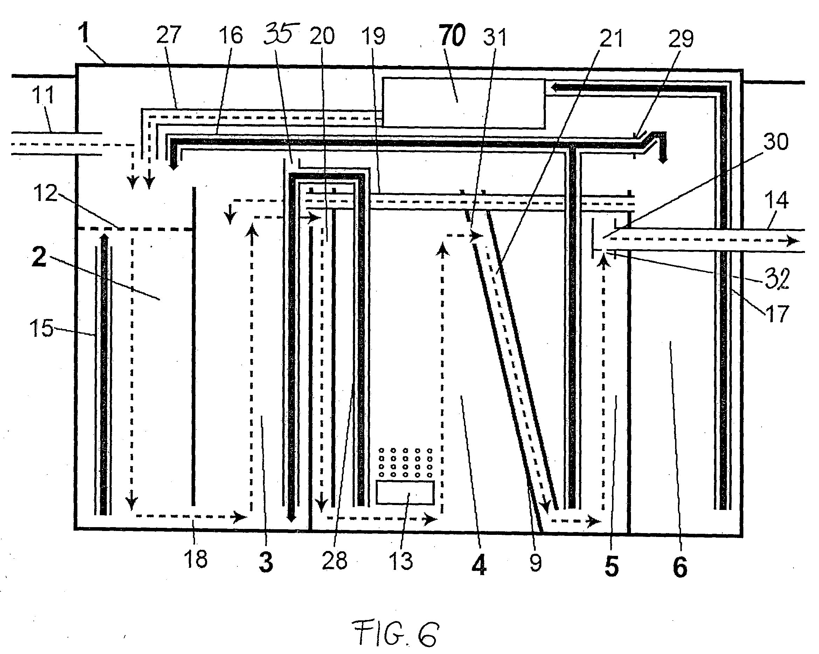

Fig. 6 shows the operating flow chart of the embodiments of the small installation 1 shown in Fig. 5. It can be seen in the flow chart that the wastewater to be purified arrives at the anaerobic space 2 of the small installation 1 in a gravitational way through inlet 11 at the top. While the wastewater passes through the filter cage 12 located in the upper section of the anaerobic space 2, the solid parts of the wastewater gets disintegrated with the help of the air delivered by the airlift pump 15, and after disintegrating and settling, the wastewater flows from the bottom of the anaerobic space 2 to the bottom of the anoxic space 3 through the lower passage opening 18.

From the anoxic space 3 the wastewater flows to the bottom of the aerobic space 4 through two symmetrically located passage pipes 20 which have upper intake and lower outlet. It can be seen in the figure, that a micro-bubble air blower 13 is located at the lower part of aerobic space 4, from which micro-bubbles emerge and move upward. From the bottom of the aerobic space 4 the wastewater moves upward in the part of space saturated with micro bubbles, and then it flows to the bottom of the post settling space 5 through the passage pipe 21, having upper inflow and lower outlet and a triangular cross section formed by fitting to the two inclined walls of the post settling space 5, after flowing through the two inlet openings 31 located symmetrically in the inclined walls 9. The solid fraction of the wastewater settles as sludge in the post settling space 5, and the water fraction is situated above the sludge fraction. A portion of the sludge is transferred with the help of an airlift pump 16 from the post settling space 5 to the anaerobic space 2, and another portion of the sludge is transferred to the sludge thickener space 6 through the sludge suction pipe 29.

It can also be seen in the flow chart, that a quantity of water is discharged from the post settling space 5 through the choke 32 formed in the T fitting 30 and through the outlet 14 working as an overflow opening. The T fitting 30, which is provided with a choke 32, has two functions, it allows the removal of the surplus fluid, and provides protection against mixing up the sludge.

From the sludge thickener space 6 the raw sludge is forwarded to the sludge precipitation space 70 with the help of the airlift pump 17, from where its dry material content is removed from time to time in a mechanical way from the sludge bag 71 located in the sludge precipitation space 70 (e.g. on a monthly basis), while the liquid part flows back to the anaerobic space 2 through the drip separator 27.

An upper overflow opening 19 can also be seen in the flow chart, which interconnects the sludge thickening space 6 and the anoxic space 3. The function of this upper overflow opening 19 is to act as overflow device and for returning the water to the cycle when the compartment becomes full after the airlift pump 16 delivers too much sludge into the sludge thickener space 6 through the sludge suction elbow 29 because of the overloading of the small installation 1, otherwise the sludge settles while the sludge thickener space 6 is being filled. Later, at the subsequent discharge operation, the airlift pump 17 sucks the surplus quantity into the sludge precipitation space 70 or into the external sludge tank.

The flow chart also shows an airlift pump 28 which is designed with open pipe end 35 at its upper point, which delivers sludge from the bottom of the aerobic space 4 to the bottom of anoxic space 3.

The two circulating loops of the small installation 1 are well visible in the flow chart. The external circulation loop works when the sludge is transferred from the post settling space 5 to the anaerobic space 2 and to the sludge thickener space 6. The function of this loop is to allow the decomposition of phosphorous to a suitable extent when the appropriately specified sludge is being circulated. The internal circulation loop works when the determined quantity of wastewater is moved from the aerobic space 4 to the anoxic space 3. The function of this loop to allow denitrification to a suitable extent of the appropriately specified circulated wastewater, i.e. that the nitrate content is removed to the suitable extent.

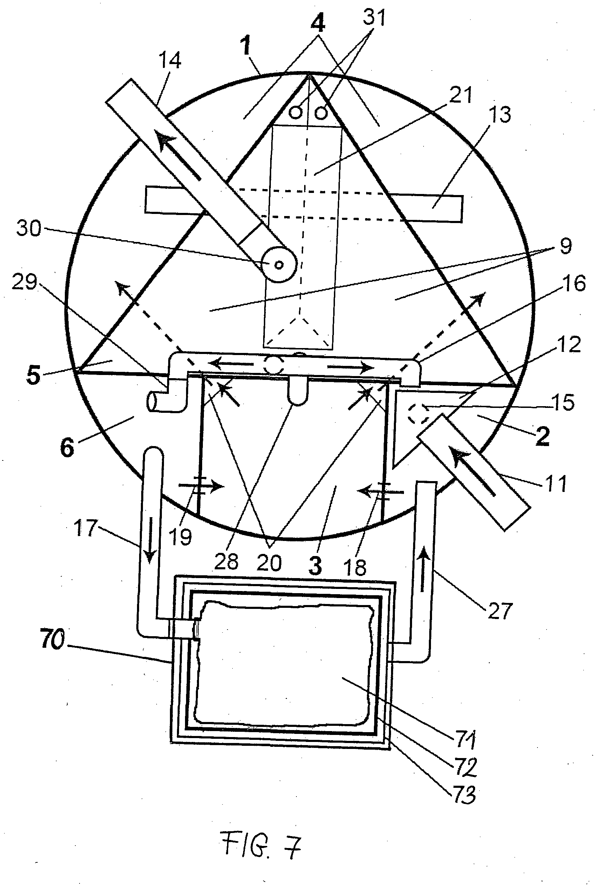

Fig. 7 shows the embodiment according to Fig. 5 of the small installation 1 together with the applied passages, flow directions and airlift pumps. The figure shows the inlet 11 of the small installation 1, which lets the wastewater to be purified in a gravitational way from above through the filter cage 12 into the anaerobic space 2 established at one of the edges of the small installation 1, and furthermore, the airlift pump 15 placed in the anaerobic space 2 can also be seen in the figure. A lower passage opening 18 is located between the anaerobic space 2 and the anoxic space 3, which directs the wastewater from the bottom of the anaerobic space 2 to the bottom of the anoxic space 3.

Two passage pipes 20 having upper inflow and lower outlet are located between the anoxic space 3 and the aerobic space 4, which direct the wastewater from the top of the anoxic space 3 to the bottom of the aerobic space 4. A micro-bubble air blower 13 is located at the bottom of the aerobic space 4. The figure shows an inlet opening 31 on each of the inclined walls 9 of the post settling space 5, as well as a passage pipe 21 having upper inflow and lower outlet, and it has a triangular cross section.

It is the passage pipe 21 having upper inflow and lower outlet that directs the partially purified wastewater between the aerobic space 4 and the post settling space 5 from the upper part of the aerobic space 4 to the bottom of the post settling space 5. An outlet 14 provided with a T fitting 30 is installed which allows discharge from the post settling space 5 to the outside of the small installation 1.

The figure also shows an airlift pump 28, which ensures connection between the anoxic space 3 and the aerobic space 4, and shows an airlift pump 16, which delivers the sludge from the post settling space 5 to the anaerobic space, and in the given case, to the sludge thickener space 6 through the sludge suction elbow 19. The figure also shows the upper overflow opening 19 between the sludge thickener space 6 and the anoxic space 3.

An airlift pump 17 can also be seen in the figure, which ensures connection between the sludge thickener-space 6 and the sludge precipitation space 70, and is located in the sludge precipitation space 70, together with the sludge bag 71 placed on the perforated support plate 72, which is mounted on the drip tray 73. It can be seen, that the fluid appearing in the sludge precipitation space 70 is returned to the anaerobic space 2 through the drip separator 27. The sludge precipitation space 70 is preferably placed within the small installation 1 in a way, that it is placed on the wall separating the spaces of the small installation 1.

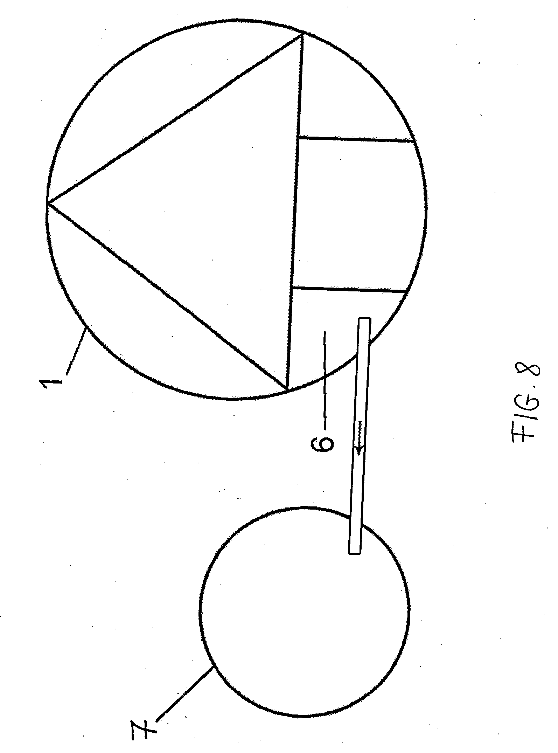

Fig. 8 shows the embodiment of the small installation as shown in Fig. 5, when external sludge tank is used. The small installation 1 can be seen in the figure, which is supplemented with and external sludge tank 7 in this case. In this configuration, an airlift pump 26 is used to transfer the stable sludge from the sludge thickener space 6 to the external sludge tank 7, and the content of the sludge tank 7 is discharged with the known method when it becomes full.

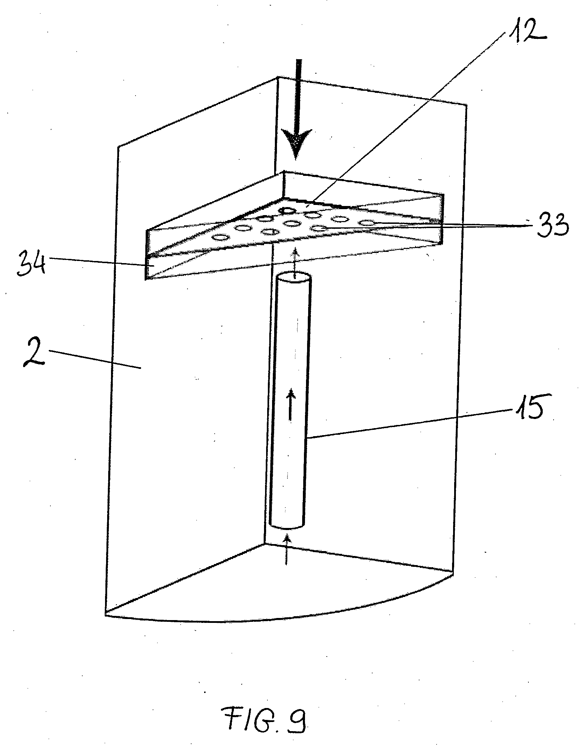

Fig. 9 shows a detail of the anaerobic space 2 of the small installation according to the invention. The anaerobic space 2 can be seen in the figure, where a filter cage 12 formed with flange 34 and perforation 33 is placed in the upper part of the anaerobic space 2 in a way that it covers about 1/3 of the anaerobic space 2. It is well visible in the figure, that the filter cage 12 is installed in the anaerobic space 2 in a manner, so the outlet of the airlift pump 15 is situated beneath the filter cage 12 at about its middle.

With this arrangement it is ensured that the granulate parts of the wastewater coming into the anaerobic space 2 are disintegrated as a result of the air bubbles released by the airlift pump 15, but the air released by the airlift pump 15 does not get absorbed in the wastewater in the anaerobic space, because an oxygen free environment is to be provided in the anaerobic space 2. This process is facilitated by the flanges 34 of the filter cage 12 by directing the air released by the airlift pump below the filter cage 12.

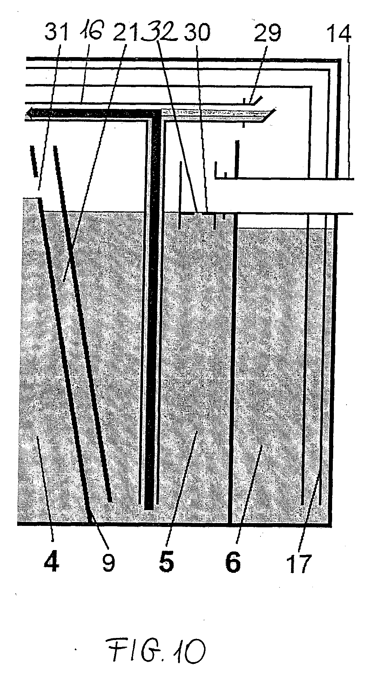

Fig. 10 shows a portion of the flow chart of the embodiment of the small installation shown in Fig. 5 in case of the basic operating mode of the small installation when no wastewater is being supplied. It can be seen in the flow chart, that the wastewater flows from the aerobic space 4 through the passage pipe 21 into the post settling space 5, when the water in the aerobic space 4 reaches or exceeds the level of the two inlet openings 31. The denser sludge content of the wastewater in the post settling space 5 settles to the bottom of the post settling space 5, while its water content is situated above it. For the purpose of removing the sludge from the post settling space 5, the water quantity discharged through the outlet 14 is reduced with the help of the choke 32 installed in the T fitting 30, which is mounted on the outlet 14 pipe, as a result of which the water level increases in the post settling space 5. The pressure of the increased water column in the post settling space 5 causes the airlift pump 16 to deliver more sludgy water.

The flow from the airlift pump braches off in two directions on the surface, its outlet (recirculation) leading towards the anaerobic space 2 is located at a lower level, while the outlet leading towards the sludge thickener space 6 is at a higher level with the help of the adjustable sludge suction elbow 29, with which the level can be regulated finely. In this way, the sludge removed by the airlift pump 16 from the post settling space 5 flows into the anaerobic space 2 in case the small installation is in basic operating mode.

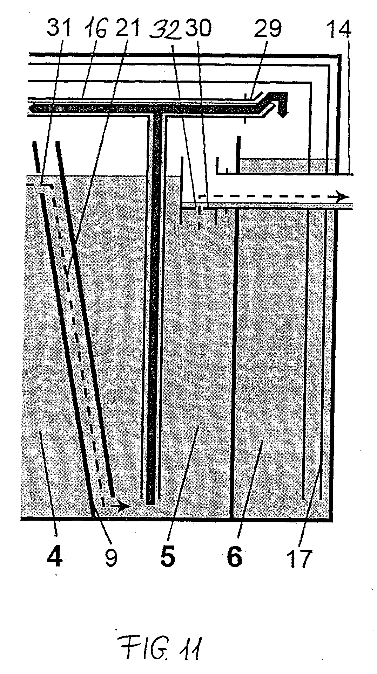

Fig. 11 shows a detail of the flow chart of the embodiment shown in Fig. 5 of the small installation according to the invention in case of the basic operating mode of the small installation, when wastewater is being supplied. If the load on small installation 1 according to the invention increases suddenly as a result of a significant increase of water level in the post settling space 5, then a portion of the surplus water quantity is removed from the post settling space 5 through the outlet 14 after flowing through the T fitting 30, which is provided with a choke 32, but the airlift pump 16 starts to deliver a higher amount of sludge as a result of the higher water pressure in the post settling space 5, so that part of the sludge flows not only into the anaerobic space 2, but also into the sludge thickener space 6 through the sludge suction elbow 29. Therefore, sludge flows to the sludge thickener space 6 only from the post settling space 5 only after the water level has increases sufficiently in the post settling space 5 after receiving wastewater.

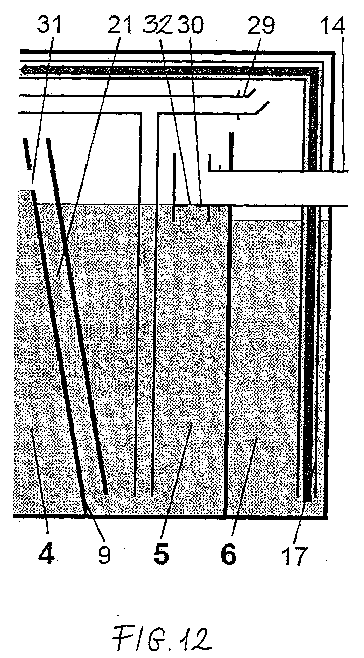

Fig. 12 shows a detail of the embodiment shown in Fig. 5 of the small installation according to the invention, when the small installation is in the sludge removal mode. The stable sludge is removed from the small installation 1 on a regular basis by directing all the air from the manifold to the airlift pump 17 once a day for maximum 15 minutes with the help of a change over valve mounted upstream to the air blower of the small installation 1.

The airlift pump 17 removes most of the sludge from the sludge thickener space 6, but the suction stops working after a certain decrease of water pressure. This makes sure, that the stable sludge and the water cannot be removed entirely from the sludge thickener space 6. Sufficient quantities of stable sludge and water always remain in it that prevents the sludge from thickening. This process is started by a timer switch, but water column, water pressure is also necessary for the airlift pump to start the process.

The airlift pump 17 is designed to suck sludge from the sludge thickener space 6 only when wastewater is being supplied, and no suction takes place when only small quantities of sludge and water are present in the sludge thickener space 6 if the water level is not sufficient even if the pump 17 starts to operate. In this way, it is not possible to remove excessive quantity of sludge.

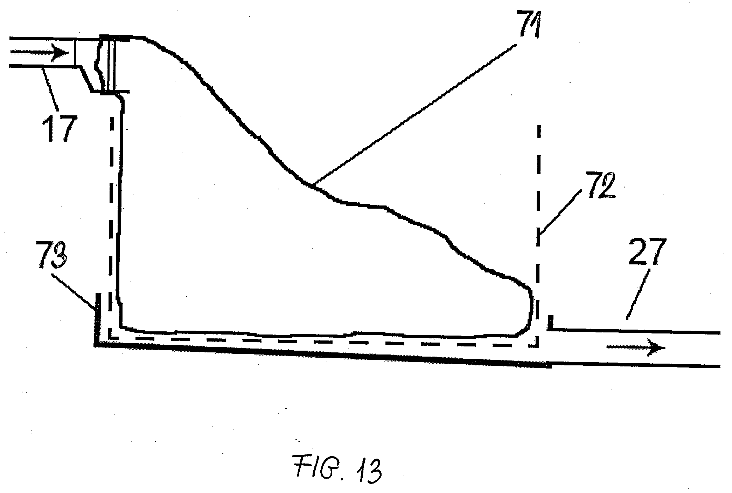

Fig. 13 shows the operation of the sludge bag applied in the small installation according to the invention with a side view. In the small installation according to the invention the sludge is moved from the sludge thickener space 6 through the airlift pump 17 into the sludge precipitation space 70, where the airlift pump 17 forwards the sludge to the sludge bag 70, which is place in the perforated support compartment 70 mounted on the drip tray 73. While the sludge stays in the permeable sludge bag 71, the fluid content of the sludge infiltrates through the sludge bag 71 and the perforated support compartment 72, and flows through the drip tray 73 and the drip separator 27 into the anaerobic space 2. The dry material content of the sludge cannot penetrate the water permeable sludge bag 71, therefore, the sludge settles on the internal wall of the sludge bag 71, where it starts to desiccate.

With the use of the sludge bag 71, the small installation 1 practically releases "purified" water through the outlet 14, which is suitable for irrigating plants at their root zone, and at the same time, the dry material content of the stable sludge is collected continuously in the sludge bag 71, which has so low quantity, that it is enough to remove it in every couple of months by replacing the sludge bag 71. The sludge bag 71 can also be used in case of the small installation according to Fig. 1, so that it is placed above the small installation 1, or in the sludge tank 7 according to the above system, and means are provided to return the water into the anaerobic space 2.

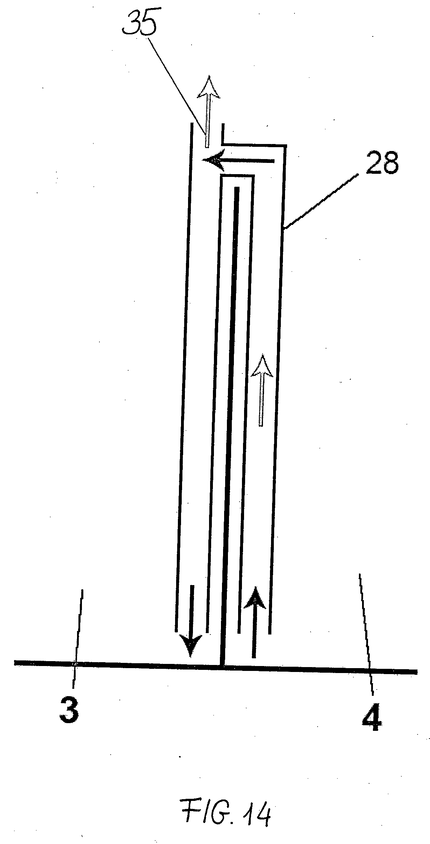

The internal circulating loop of the small installation according to Fig. 5 is shown in Fig. 14. An airlift pump 28 can be seen in the figure, which delivers wastewater from the aerobic space 4 to the anoxic space 3 in a manner that it is designed with an open pipe end 35 at its top points in order that the air could escape from the wastewater carrying lots of air from the aerobic space 3, and that the air could not go into the anoxic space. 3. With the internal circulating loop it is necessary to return determined quantity of wastewater aerobic space 4 to the anoxic space 3, so that the denitrification of the wastewater with appropriate extent could take place in case of the properly specified circulated wastewater, i.e. so that the nitrate could be removed to the sufficient extent.

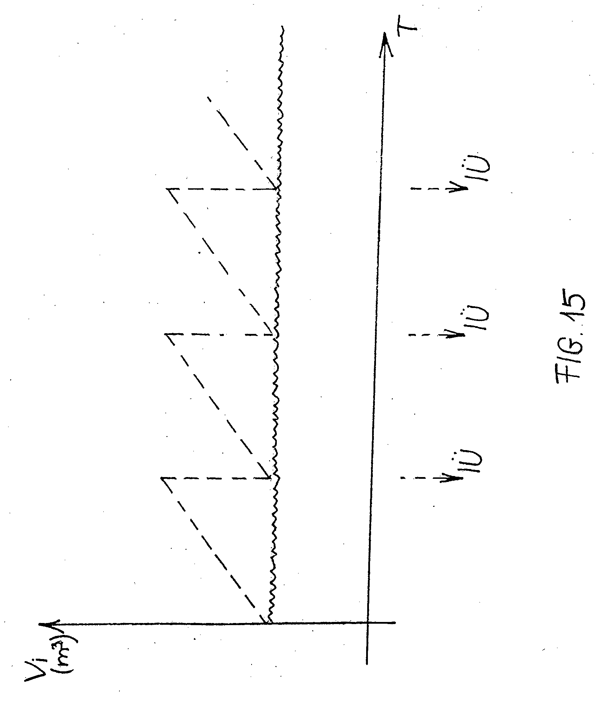

Fig. 15 shows the comparative sludge load functions of the small installation 1 according to the invention and the traditional small biological sewage treatment plants. The sludge load V is shown in the function of time T with dashed line for the traditional small sewage treatment plant. The dashed line well shows, that in this case a sludge load V of the plant increases gradually, then after a certain time T, following the sludge removal IÜ from the plant, the sludge load V of the plant drops suddenly, then starts to increase again, and so on.

A continuous line in Fig. 15 indicates the sludge load V in the function of time T for the small installation 1 according to the invention. In case of the small installation 1 a suitable quantity of stable sludge is removed on a daily basis with appropriate control, and the removed sludge quantity is forwarded to the sludge tank 7, 8, meaning that this sludge quantity is taken out of the purification process performed by the small installation 1. In this way, it is ensured that the sludge load V of the small installation is kept at a constant level continuously, i.e. the sludge load V is even in the function of time T, which improves the efficiency of the small installation 1 significantly.

In case of a preferred actual embodiment of the solution according to the invention, the wastewater to be purified arrives at the anaerobic space 2 of the small installation 1 from above in a gravitational way through the filter cage 12 located at the upper part of the anaerobic space 2. In the anaerobic space 2 the granular parts of the wastewater get disintegrated with the help of the water delivered by the airlift pump 15 from the aerobic space 4, and the disintegrated parts settle to the bottom of the anaerobic space 2, from where the wastewater flows in the anoxic space 3 through the lower passage opening 18. From the anoxic space 3 the wastewater flows through the passage pipe 20 to the bottom of the aerobic space 4, from where it moves upward and travels through the micro-bubble air zone produced by the micro-bubble blower 13 located at the lower part of the aerobic space 4.

From the aerobic space 4 the aerated wastewater flows to the bottom of the post settling space 5, having an inclined wall 9, through the passage pipe 21, having upper intake and lower outlet, then the solid fraction of the wastewater in the post settling space 5 settles as sludge at the bottom of the post settling space 5, while its water fraction is situated above the sludge fraction. With the help of the airlift pump 16 a certain portion of the sludge is transferred from the post settling space 5 to the anaerobic space 2, while another portion of the sludge is transferred to the sludge tank 8, and at the same time, the purified water is removed from the post settling space 5 and it is discharged from the installation through the outlet 14, which acts as an overflow device. It is required to regulate the discharge of water in order to prevent the sludge settled at the bottom of the post settling space 5 from mixing up, and from carrying away by the discharged water, if a larger quantity for wastewater comes into the installation, or if the incoming wastewater has higher water content.

The gravitationally separated sludge in the post settling space 5 is circulated with the help of the airlift pump 16 for maximum 20 hours a day after dividing it to the sludge thickener space 6 and the anaerobic space 2. The sludge in the sludge thickener space 6 becomes denser in a gravitational way, from where the sludge is transferred to the sludge tank 7 with the help of the airlift pump 17 with appropriate control.

The small installation 1 has two sludge tanks 7, 8, which are joined by connecting passage 10, therefore, a higher capacity recipient is available for storing the sludge.

The sludge accumulating in the sludge tanks 7, 8 is to be removed or utilized in another manner depending on the number of users and the load of the small installation 1. The purified water from the sludge thickener space 6 is also transferred to the anaerobic space 2 through the overflow opening 23.

With an appropriate setting of the regulation the small installation according to the invention allows that the stable sludge is continuously transferred to the sludge tank 7 with the help of a pump, thus ensuring an operation which is much smoother. With a simple inspection the user is able to monitor the quantity of stable sludge accumulating in the sludge tanks 7, 8, allowing to the user to schedule the emptying operations of the tanks. In case of the known and presently used small plants this possibility is not available, because the sludge accumulates in various spaces of the small plant, the quantities of the sludge in the various spaces can be determined only on the basis of settling method, which require more work from the user.

As a result of this kind of removal of stable sludge, it is possible to design the volumetric proportions of the existing spaces of the small installation 1 in harmony with the removal of sludge. Accordingly, the summarized volume of the anoxic space 3 and the anaerobic space 2 is about half the volume of the aerobic space 4.

As a portion of the stable sludge is removed regularly in case of the small installation 1, therefore, the sludge load on the system is significantly lower, and a micro-bubble air blower 13 with a less capacity is enough in the aerobic space 4.

According to the invention, the small installation 1 has a cylindrical shape, and inside this shape the components are arranged next to one another, including the anaerobic space 2 having a shape of a broken segment, the anoxic space 3 and the sludge thickener space 6 in a way, that the side wall 36 constitutes the vertical side wall for each of the three spaces.

Within the small installation 1, the post settling space 5 is established with a triangular circumference along its upper edges, the vertical side wall of which is the side wall 36. Each of the further two side walls of the post settling space 5 is formed by a triangular inclined wall 9. An aerobic space 4 is formed within the small installation in a way, that the aerobic space 4 is arranged around the post settling space 5, actually next to it at two sides, and as a result of inclined walls 9 of the post settling space 5 it is also located below it, because the post settling space 5 does not extend to the bottom of the small installation 1. With the appropriate allocation of spaces of the small installation 1, and with proper design of the separating walls and the inclined walls 9, it can be ensured that the separating walls of the spaces themselves provide static stability against earth pressure for the small installation without the use of bracing.

According to the invention, the wastewater to be purified arrives at the anaerobic space 2 of the small installation 1 in a gravitational way from above through the inlet 11. While flowing through the filter cage 12 installed in the upper part of the anaerobic space 2 the granulate wastewater parts are disintegrated with the help of the air delivered by the airlift pump 15, then after disintegrating and settling, the wastewater flows from the bottom of the anaerobic space 2 through the passage opening 18 over to the bottom of the anoxic space 3.

From the anoxic space 3 the sludge flows to the bottom of the aerobic space 4 through two symmetrically located passage pipes 20 having upper intake and lower outlet. A micro-bubble air blower 13 is located in the lower part of the aerobic space 4, from which air bubbles emerge and move upwards. From the bottom of the aerobic space 4 the sludge moves upward thought the area saturated with micro air bubbles, then it flows through the inlet openings 31 arranged symmetrically in the inclined walls 9 to the bottom of the post settling space 5 through the passage pipe 21 having upper inlet and lower outlet and a triangular cross section formed by fitting it to the two inclined walls of the post settling space 5. In the post settling space 5 the solid fraction of the wastewater settles as sludge, and its water fraction is situated above the sludge fraction. From the post settling space 5 a portion of the sludge is transferred to the anaerobic space 2 with the help of the airlift pump 16, while another portion of the sludge is transferred to the sludge thickener space 6 through the sludge suction elbow 29.

From the post settling space 5 the water flows through the T fitting 30 and its choke 32, and is discharged through the outlet 14, which acts as an overflow opening. The T fitting 30, which is provided with a choke 32, has two functions, on the one hand it ensures the removal of the surplus fluid, and on other hand it provides protection against mixing up the sludge.

From the sludge thickener space 6 the raw sludge is transferred by the airlift pump 17 to the sludge precipitation space 70, where its dry material content is mechanically removed regularly (every few months) from the sludge bag 71 which is located in the sludge precipitation space 70, while its fluid part flows back to the anaerobic space 2 through the drip separator 27.

The sludge thickener space 6 and the anoxic space 3 are interconnected by the upper overflow opening 19, the function of this upper overflow opening 19 is to act as an overflow opening if the airlift pump 16 delivers too much sludge into the sludge thickener space 6 through the sludge suction elbow 29, when the small installation 1 is overloaded, otherwise the sludge thickener space 6 starts to get filled and the sludge settles, but the water is returned to the cycle if the compartment becomes full. Later, at the subsequent discharge operation, the surplus quantity is sucked over by the airlift pump 17 to the sludge precipitation space 70 or to the external sludge tank.

There are two circulating loops in the small installation 1. The external circulation loop works when the sludge flows from the post settling space 5 to the anaerobic space 2 and to the sludge thickener space 6. The function of this loop is to ensure a decomposition of phosphorus to a sufficient extent in case of the properly specified circulated sludge. The internal circulation loop works, when a predetermined quantity of wastewater flows from the aerobic space 4 to the anoxic space 3. The function of this loop is to ensure the denitrification of the wastewater to a sufficient extent in case of a properly specified circulated wastewater, i.e. to make sure that the nitrate is removed to a sufficient extent.

In case of the embodiment according to Fig. 5 of the small installation 1 according to the invention, the automatic control of the sludge quantity and the automatic removal of the excess sludge will take place as follows:

The small installation 1 is designed in a way, that the sludge content of the fluid circulated in the purification process remains practically constant in spite of the usage. Accordingly, it is not required to monitor the sludge level in the equipment continuously, because it is constant in the purification process, and the extra quantity is stored separately. The advantage of this solution is that the removal of the extra sludge does not interfere with the purification process, and the operation of the small installation 1 is significantly simpler too.

The post settling space 5 of the small installation 1 is the last station before the purified water is discharged from the small installation 1 through the outlet 14. There is a T fitting 30, provided with choke 32, installed upstream to the outlet 14 pipe. Its function is to reduce the discharge of water when large quantity wastewater is received, so that the sludge at the bottom of the post settling space 5 would not be mixed up and would not be entrained from the installation because of the increased current. The T fitting 30 is connected to the outlet 14 pipe in a manner, that their facing open ends are turned upward and downward. The choke 32 is welded in its lower end, so that it is in line with the bottom of the outlet 14 pipe in horizontal direction. The choke 32 allows a flow rate of about 3 litre/min mostly in case of smaller plants (the value may vary depending on the size of small installation). The purified water flows from the upper part of the post settling space 5 through the lower end of T fitting 30 to the choke 32, and after bubbling through, it reaches the bottom level of outlet 14 pipe, and then it leaves the installation.

The sludgy water is lifted from the bottom of the post settling space 5 by an airlift pump 16, and it is delivered to two locations, to the anaerobic space 2, i.e. to the filter cage 12 and to the sludge thickener space 6. In the latter case, an adjustable discharge level, consisting of a sludge sucking elbow 29, which is made from a 90 degree elbow pipe, which is turned upwards slightly, prevents the water from flowing over the end of the elbow pipe in case of normal water level, and from flowing into the sludge thickener space 6.

In case of normal water level, the water level in the post settling space 5 is practically in line with the bottom level of the outlet 14. As described above, no sludge is delivered from the airlift pump 16 to the sludge thickener space 6 in such circumstances, because the water level is too low in the pipe to flow over the flange of the sludge suction elbow 29.

When a larger amount of wastewater arrives at the small installation 1, the water level starts to raise in the post settling space 5, because the choke 32 does not allow enough fluid through to maintain the water level constant here. The water level is able to raise until it reaches the upward turned end of the T fitting 30, where the water flows over and gets into the outlet 14 pipe. In turn, this raise of water level also increases the water level in the airlift pump, therefore, the sludge also flows into the sludge thickener space 6 through the adjustable sludge suction elbow 29, where it becomes thicker in a gravitational way. In case of appropriate water level, the cleaner water on the surface flows from this space over the upper overflow opening 19 into the anoxic space 3, therefore, the sludge thickener space 6 cannot be overfilled.

With a slow normalization of the water level in the post settling space 5 the original conditions is restored, so the sludge is unable to flow into the sludge thickener space 6 through the airlift pump 16. The changeover valve, which controls the pumping of sludge from the sludge thickener space 6 to the sludge precipitation space 70 or to the external sludge tank, directs the full air quantity only for 15 minutes a day from the other parts of the installation to the airlift pump 17 located in the sludge thickener space 6. During this quarter of an hour - if the water level is high enough - this airlift pump 17 delivers the densest excess part of the sludge from the bottom of the space to the above mentioned sludge precipitation space 70, or to the external sludge tank 7.

In case of continuous use, enough sludge is transferred from the post settling space 5 through the airlift pump 16 to the sludge thickener space 6 to keep the water level there high, so that the airlift pump 17 is able to lift away the excess sludge from the sludge thickener space 6.

If, on the other hand, the water level in the post settling space 5 is not high enough for a long period of time because of underloading to allow the airlift pump 16 to lift over the sludge into the sludge thickener space 6, then the water supply ceases to exists to it. At this time, a minimum sludge quantity is maintained in the purification process, and it is not possible for the airlift pumps to gradually eliminate all the sludge from the process and thus it is unable to halt the process even if the underloading lasts for a longer period of time. With the sludge treatment lasting for 15 minutes a day among such circumstances, the water level in the sludge thickener space 6 also decrease within a couple of days to a level, which does not allow the airlift pump 17 located here to deliver more sludge to the sludge precipitation space 70 or to the external sludge tank 7. Consequently, the water level varies within given limits also in the sludge thickener space 6, and the space is never emptied fully.

The efficiency of the small installation 1 according to the invention is very good, because the sludge load is nearly even, the sludge density is nearly constant within the small installation 1, therefore, the bacterium culture, as well as the air and oxygen need of the small installation 1 is nearly constant too. As a result, the operation of the small installation does not require the monitoring of these parameters, and their adjustment is not required because the sludge load is nearly constant.

As a result, the risk of blockage in the small diameter pipes of the small installation is lower, no sludge lump or blockage can occur in the airlift pumps. It is not required to measure the sludge concentration from time to time, by which the excessive quantity of the sludge could be determined, therefore, it is not necessary to reduce the sludge concentration at suitable intervals, meaning that it is not necessary to remove the sludge from the given space by means of sludge pump or tanker truck, and there is no need to transport the excess sludge. This leads to the additional benefit, that the operation of the small installation 1 is much more stable, it requires much less inspection, and there is no need for removing the stable sludge, when the small installation 1 is out of operation for a short time or it operates intermittently.
The advantage of the small installation 1 according to the invention includes the fact that no stable sludge is produced if the small installation does not receive wastewater, therefore, the system cannot take out stable sludge from it either.

This is different form the systems, where the excess sludge is taken out regularly from the small plant. In this case, there is a risk of removing too much stable sludge from the system causing the decomposing bacterium flora of the small plant to decrease to a level, where the small plant cannot meet its function.

In case of the embodiment shown in Fig. 5 of the small installation 1 according to the invention the route of the air can be changed with the help of an air blower and a changeover valve. Accordingly, the air from the manifold is directed to the required locations, for instance when the airlift pumps 15, 16, 28 are to be operated, or to the micro-bubble air blower 13.

Alternatively, the air can be routed only to the airlift pump 17, which occurs once a day for a period of 15 minutes. This mode of air distribution is necessary to inflate the sludge bag 17 as a result of a larger air quantity coming suddenly when all the air is directed to the airlift pump 17, causing the deposited desiccated sludge to dislodge from the side of the sludge bag, thus facilitating the filtering of the new stable sludge.

The application of biofilm is possible in the small installation 1 if required primarily in case of small installations 1 used seasonally (holiday resorts, camping, catering places), so that the small installation 1 could survive the downtime period when there is no incoming wastewater.

In case of a possible embodiment of the small installation according to the invention, the volumes of the various spaces of the small installation 1 are designed as follows for a small installation used for 6 people, where the figures also indicate the proportions of the volumes of spaces relative to one another: anaerobic space 2 = 0.1 m3, anoxic space 3 = 0.23 m3, aerobic space 4 = 0.77 m3, post settling space 5 = 0.22 m3, sludge thickener space 6 = 0.1 m3.

In case of the small installation 1 according to the invention, the sludge tank 7, 8 can be placed also outside the small installation 1 within its immediate vicinity.

The material of the small installation 1 according to the invention is plastic, stainless steel, preferably 6-8 mm thick polypropylene plate, in which case the small installation 1 is welded with known method of plastic welding.

The small installation 1 according to the invention can be preferably used with capacities enough to serve 1-50 people, for purifying sanitary wastewater originating from family houses, hotels and public institutions.

The small installation 1 according to the invention will be installed in a pit prepared in the ground, so that its entire upper surface is accessible from above, or an access is established in a way, that an access hole is made with a diameter smaller than that of the circular perimeter of the small installation 1 for small installation 1 having compact size. The smaller circular access hole is to be prepared in a way, that the parts of the small installation 1 requiring maintenance are easily accessible.

In case of a small installation 1 according to the invention, the sludge bag 71, placed in the sludge precipitation space 70 or at other location, can be easily lifted out of the small installation 1 with the help of a perforated support compartment 72. If required, the sludge precipitation space 70 can be extended by using larger sludge bag 71 and/or by using more sludge bags 71.
When more sludge bags 71 are used, then the end of the airlift pump 17 can be branched off at various levels, by which the filling sequence of the sludge bags 71 can be adjusted (using safety sludge bag).

The material of the sludge bag: water permeable material, preferably woven polypropylene, woven jute, preferably made of decomposing material.

The advantage of the solution according to the invention is that the purification process takes place in the presence of sludge quantity kept at a constant level, as the sludge is removed on a daily basis, when the stable sludge is taken to the sludge tank located within the small installation.
A further advantage of the solution is that the sludge is pumped out from a single tank, i.e. from the sludge tank, which is particularly significant in case of small sizes (typically up to a population equivalent of 10).

### List of references:

1 - small installation
2 - anaerobic space
3 - anoxic space
4 - aerobic space
5 - post settling space
6 - sludge thickener space
7 - sludge tank
70 - sludge precipitating space
71- sludge bag
72 - perforated support compartment
73 - drip tray
8 - sludge tank
9 - inclined wall
10 - connecting passage
11- inlet
12 - filter cage
13 - micro-bubble air blower
14 - outlet
15 - airlift pump
16 - airlift pump
17 - airlift pump
18 - lower passage opening
19 - upper overflow opening
20 - passage pipe
21- passage pipe
22 - overflow opening
23 - overflow-opening
24 - overflow opening
25 - composting plant
27 - drip separator
28 - airlift pump
29 - sludge suction elbow
30 - T fitting
31- inlet opening
32 - throttle
33 - hole
34 - flange
35 - open pipe end
36 - side wall
IU - sludge discharge
V - sludge load
T - time

## Claims

1. Small installation for biological wastewater treatment with improved efficiency, comprising an anaerobic space, an anoxic space, an aerobic space which is provided with a micro-bubble air blower, a post settling space, and a sludge thickener space, where passages, outlets, airlift pumps, lower and upper overflow weirs are located among these spaces,
wherein the wastewater to be purified arrives at the anaerobic space (2) of the small installation (1) in a gravitational way with upper inflow, and while the wastewater passes through the filter cage (12) located in the upper part of the anaerobic space (2) the granular parts of the wastewater are disintegrated with the help of the air provided by the airlift pump (15), which solid parts settle to the bottom of the anaerobic space (2), and after disintegrating and settling the wastewater flows from the bottom of the anaerobic space (2) to the bottom of the anoxic space (3) through a lower passage opening (18), and then the wastewater flows from the anoxic space (3) to the bottom of the aerobic space (4) through symmetrically located passage pipes (20) having upper inlet and lower outlet, where the wastewater moves upward in the section of the space which is saturated with the micro-bubbles produced by the micro-bubble air blower (13), and flows through the two inlet openings (31) located symmetrically in the inclined walls (9) and through the passage pipe (21) having upper inlet and lower outlet, and having a triangular cross section as fitted to the two inclined wall (9) of the post settling space (5), to the bottom of the post settling space (5), and in this post settling space (5) the sludge with higher density settles, and the water fraction is situated above the sludge fraction,
and the sludge is sucked out from the post settling space (5), so that the T fitting (30) having a throttle (32) on the outlet pipe (14) that reaches into the post settling space (5), reduces the flow rate of the outlet water to about 3 litre/min. as a result of which the height of the water column in the post settling space (5) increases, and because of the increased pressure of the water column, the airlift pump (16) delivers the water to the anaerobic space (2) only in case of low quantity of water after branching in two directions on the surface, while in case of a larger quantity of water, sludgy water flows into the sludge thickener space (6) after flowing over the sludge suction elbow (29) which has an adjustable level and provides a higher overflow, and from the sludge thickener space (6) it is carried to the sludge precipitation space (70) with the help of the airlift pump (17) working with maximum capacity for about 15 minutes a day, provided liquid sludge has accumulated,
where the liquid part of the sludge is filtered through the permeable sludge bag (71) and flows into the anaerobic space (2) through the drip tray (73) and the connected drip separator (27),
and the dry content of the sludge is collected in sludge bag (71), where it starts to desiccate,
wherein the small installation (1) has a circular base, its anaerobic space (2), anoxic space (3) and sludge thickener space (6) are established side by side, so that one vertical side wall for each of these three spaces is provided by a side wall (36), and the post settling space (5), having a perimeter shaped as equilateral triangle along its upper edges, is designed in a way, that its vertical wall is formed by the side wall (36), and each of the further two side plates are formed by a triangular inclined wall (9),
and the aerobic space (4) is aligned around the post settling space (5), so that the aerobic space (4) is located next to the two sides of and below the post settling space (5),
the sludge thickener space (6) and the anoxic space (3) of the small installation (1) are interconnected by an upper overflow opening (19), which makes sure that the water returns to the anoxic space (3) through the upper overflow opening (19), when the airlift pump (16) delivers too much sludge into the sludge thickener space (16) because of the overloading of the small installation (1), in the design of the internal recirculation loop of the small installation (1) there is an open pipe end (35) at the uppermost point of the pipe of the airlift pump (28) ensuring that the wastewater can return to the anoxic space (3) from the aerobe space (4), and ensuring the air is let away,
**characterized by** that.
the sludgy water is lifted from the bottom of the post settling space (5) by an airlift pump (16), and it is delivered to two locations, to the anaerobic space (2), i.e. to the filter cage (12) and to the sludge thickener space (6), in the latter case, an adjustable discharge level, consisting of a sludge sucking elbow (29), which is made from a 90 degree elbow pipe, which is turned upwards slightly, prevents the water from flowing over the end of the elbow pipe in case of normal water level, and from flowing into the sludge thickener space (6),
in case of normal water level, the water level in the post settling space (5) is practically in line with the bottom level of the outlet (14), as described above, no sludge is delivered from the airlift pump (16) to the sludge thickener space (6) in such circumstances, because the water level is too low in the pipe to flow over the flange of the sludge suction elbow (29),
when a larger amount of wastewater arrives at the small installation (1), the water level starts to raise in the post settling space (5), because the choke (32) does not allow enough fluid through to maintain the water level constant here, the water level is able to raise until it reaches the upward turned end of the T fitting (30), where the water flows over and gets into the outlet pipe (14), in turn, this raise of water level also increases the water level in the airlift pump, therefore, the sludge also flows into the sludge thickener space (6) through the adjustable sludge suction elbow (29), where it becomes thicker in a gravitational way, in case of appropriate water level, the cleaner water on the surface flows from this space over the upper overflow opening (19) into the anoxic space (3), therefore, the sludge thickener space (6) cannot be overfilled.

2. Small installation according to claim 1, **characterised by** that, the volumetric proportions of the spaces of the small installation (1) are determined so that its 100 % volume consists of 7 % for the anaerobic space (2), 16.2 % for the anoxic space (3), 54.2 % for the aerobic space (4), 15.6 % for the post settling space (5), 7 % for the sludge thickener space (6), and therefore, a small installation (1) designed for serving 6 people has the following volumes:
anaerobic space (2) = 0.1 m3, anoxic space (3) = 0.23 m3, aerobic space (4) = 0.77 m3, post settling space (5) = 0.22 m3, sludge thickener space (6) = 0.1 m3.

3. Small installation according to claim 1 or 2, **characterized by** that, the material of the small installation (1) is plastic, preferably 6-8 mm thick polypropylene plate, which is welded with known plastic welding technology, and that its material can also be stainless steel or polyester.

4. Small installation according to any of the claims 1 - 3, **characterised by** that, a portion of the stable sludge is removed on a regular basis, as a result of which the sludge load of the system is significantly lower, and the micro-bubble air blower (13) required in the aerobic space (4) can have a smaller capacity.

5. Small installation according to any of the claims 1 - 4, **characterised by** that, the sludge tank (7, 8) can be located outside the small installation (1) also in its immediate vicinity, if required.

6. Small installation according to any of the claims 1 - 5, **characterised by** that, the small installation (1) has a capacity to serve 3-50 users by purifying sanitary wastewater coming from family house, hotels, and public institutions.

7. Small installation according to any of the claims 1 - 6, **characterised by** that, the material of the sludge bag (71) is water permeable material, preferably woven polypropylene, woven jute, preferably made of decomposable material.

## Patentansprüche

1. Kleine Installation mit verbesserter Effizienz für Reinigung des biologisches Abwasser gebildet aus einem anaeroben Raum, anoxischen Raum, aeroben Raum mit einer Luftdüse mit Mikroblasen ausgerüstet,
aus einem Nachsetzraum und aus einem Schlammverdichterraum, und Durchfahrten, Ausgänge, Luftdrückpumpen und untere und obere Überlaufwehre sind zwischen diesen Räumen platziert,
worin
das zu reinigende Abwasser mittels der Gravitation mit einem oberen Eingang in den anaeroben Raum (2) der kleine Installation (1) ankommt und das Abwasser fährt durch das in dem oberen Teil des anaeroben Raumes (2) platzierte Filterkorb (12), die granuläre Fraktionen des Abwassers sind mit der Hilfe der Luftdrückpumpe (15) gelieferter Luft zersetzt, die feste Fraktionen sind auf den Grund des anaeroben Raumes (2) niedergeschlagen und nach der Zersetzung und Niederschlagung das Abwasser fließt aus dem Grund des anaeroben Raumes (2) auf den Grund des anoxischen Raumes (3) durch eine untere Durchfahrtsöffnung (18), und dann
das Abwasser fließt aus dem anoxischen Raum (3) auf den Grund des aeroben Raumes (4) durch die über oberen Eingang und unteren Ausgang verfügten und symmetrisch platzierten Durchfahrtsrohren (20),
wo das Abwasser sich nach oben in der Sektion des Raumes saturiert mit den von der Luftdüse mit Mikroblasen (13) produzierten Mikroblasen bewegt und es fließt durch die zwei in der geneigten Wand (9) symmetrisch platzierten Eingangsöffnungen (31) und durch das über oberen Eingang und unteren Ausgang und eine Triangelsektion verfügtes Durchfahrtsrohr (21) gefittet zu der zwei geneigten Wand (9) des Nachsetzraumes (5) auf den Grund des Nachsetzraumes (5), und im Nachsetzraum (5) der Schlamm mit größerer Densität ist niedergeschlagen und die Wasserfraktion ist über die Schlammfraktion gelegt,
und der Schlamm ist aus dem Nachsetzraum (5) ausgesaugt so dass die auf dem Ausgangsrohr (14) mit einem Drosselgerät (32) ausgestattete und in den Nachsetzraum (5) eingedringte T-Form (30)
den Fluß des ausfließenden Wassers gegebenenfalls auf ca. 3 Liter/Min., verlangsamt infolgedessen die Höhe der Wassersäule im Nachsetzraum (5) erhöht und wegen des erhöhten Wassersäulesandruck, die Luftdrückpumpe (16) mit Verzweigung in zwei Richtungen auf der Fläche liefert das Wasser in den anaeroben Raum (2) nur bei wenig Wasser ab, aber bei viel Wasser das schlammige Wasser fließt in den Schlammverdichterraum (6) durch das mit stellbarem Niveau ausgestattete Schlammabzugsknie (29) das einen höheren Überlauf versichert, und aus dem Schlammverdichterraum (6) erreicht es den Schlammpräzipitatsraum (70) mittels der mit einer ca. 15 Minuten/Tag Maximalkapazität funktionierenden Luftdrückpumpe (17) wenn sich der fließende Schlamm angehäuft ist, wo die fließende Schlammfraktion durch den wasserdurchlässigen Schlammsack (71) filtriert ist und sie fließt in den anaeroben Raum (2) durch die Tropfplatte (73) und durch den verbundenen Schlammseparator (27)
und der trockene Inhalt des Schlammes ist in den Schlammsack (71) gesammelt wo er zu trocknen beginnt,
und herein die kleine Installation (1) hat
ein zirkuläre Base, ihr anaerobe Raum (2), anoxische Raum (3) und Schlammverdichterraum (6) sind nebeneinander derart platziert dass eine vertikale Seitenwand der jeden drei Räume mit einer Seitenwand (36) ausgestattet ist und der Nachsetzraum (5) mit einem Umfang ausgeformt wie ein gleichseitiges Dreieck entlang seinen oberen Borden ist so gebildet dass seine vertikale Wand aus der Seitenwand (36) gebildet ist und jede zwei weitere Seitenplatten mit einer dreieckigen Schrägwand (9) gebildet sind, und der aerobe Raum (4) ist um den Nachsetzraum (5) so gefluchtet dass der aerobe Raum (4) neben den zwei Seiten und unter dem Nachsetzraum (5) platziert ist,
der Schlammverdichterraum (6) und der anoxische Raum (3) der kleinen Installation (1) sind mit einer oberen Überlaufsöffnung (19) zusammengebunden die den Rücklauf des Wassers in den anoxischen Raum (3) durch die Überlaufsöffnung (19) versichert wenn die Luftdrückpumpe (16) zu viel Schlamm in den Schlammverdichterraum (6) wegen der Überanstrengung der kleinen Installation (1) liefert,
im Design der inneren Rezirkulationsöse der kleinen Installation (1) gibt es ein Rohrende (35) auf dem höchsten Punkt des Rohres der Luftdrückpumpe (28) das den Rücklauf des Wassers in den anoxischen Raum (3) aus dem aeroben Raum (4) und die Ausfahrt des Wassers versichert
das schlammige Wasser von den Grund des Nachsetzraumes (5) mit einer Luftdrückpumpe (16) angehoben ist und es ist auf zwei Plätze, in den anaeroben Raum (4) nämlich ins Filterkorb (12) und in den Schlammverdichterraum (6) liefert, in diesem letzten Fall ein stellbares Abgangsniveau bestehend aus einem Schlammabzugsknie (29) hergestellt aus einem Knierohr mit 90 Grad was ein wenig nach oben dreht, behindert das Wasser über das Ende des Knierohres überzulaufen bei normalem Wasserniveau und in den Schlammverdichterraum (6) zu fließen,
bei normalem Wasserniveau das Wasserniveau im Nachsetzraum (5) ist praktisch gleichstimmig mit dem unteren Niveau des Ausgangsrohres (14) wie es oben geschrieben ist, keinen Schlamm durch die Luftdrückpumpe (16) in den Schlammverdichterraum (6) geliefert ist unter solchen Umständen, weil das Wasserniveau im Rohr zu niedrig ist um über den Bund des Schlammabzugsknies (29) zu fließen,
wenn mehr Wasser zu der kleinen Installation (1) ankommt, das Wasserniveau beginnt im Nachsetzraum (5) anzusteigen, weil die Drossel (32) nicht genug Fluid passieren lässt das beständige Wasserniveau hier zu behalten, das Wasserniveau kann so hoch ansteigen dass es das hohe drehte Ende der T-Form (30) erreicht, wo das Wasser überfließt und in den Ausgangsrohr (14) passiert, aber der Anstieg des Wasserniveaus höht das Wasserniveau auch in der Luftdrückpumpe, deshalb fließt der Schlamm auch in den Schlammverdichterraum (6) durch das stellbare Schlammabzugsknie (29) wo er mittels der Gravitation dichter wird, bei normalem Wasserniveau das reinere Wasser auf der Fläche fließt aus diesem Raum durch die oberen Überlaufsöffnung (19) in den anoxischen Raum (3), so der Schlammverdichterraum (6) kann nicht überfüllt sein.

2. Kleine Installation nach Anspruch 1, **dadurch gekennzeichnet, dass** die volumetrische Proportionen der Räumen der kleinen Installation (1) so bestimmt sind dass sein Volumen 100% aus 7% für den anaeroben Raum (2), 16,2% für den anoxischen Raum (3), 54,2% für den aeroben Raum (4), 15,6% für den Nachsetzraum (5), 7% für den Schlammverdichterraum (6) besteht und so eine kleine Installation (1) mit einer Durchbildung 6 Personen zu bedienen hat die folgende Volumen:
anaerober Raum (2) = 0,1m³, anoxischer Raum (3) = 0,23 m³, aerober Raum (4)= 0,77m³, Nachsetzraum (5) = 0,22 m³, Schlammverdichterraum (6) = 0, m³.

3. Kleine Installation nach Anspruch 1 oder 2, **dadurch gekennzeichnet, dass** das Material der kleinen Installation (1) Plastik, vorzugsweise 6-8mm dicke Polypropylen Platte ist, schweißte mit bekannter Plastikschweißtechnik und ihr Material kann Nirostahl oder Polyester sein.

4. Kleine Installation nach einem der Ansprüche 1 bis 3, **dadurch gekennzeichnet, dass** eine Portion des festen Schlammes regelmäßig geleert ist, infolgedessen die Schlammbelastung des Systems bezeichnenderweise kleiner ist und die Luftdüse mit Mikroblasen (13) erfordert im aeroben Raum (4) kann eine kleinere Kapazität haben.

5. Kleine Installation nach einem der Ansprüche 1 bis 4, **dadurch gekennzeichnet, dass** der Schlammtank (7,8) außer der kleinen Installation (1) auch ganz in der Nähe platziert kann.

6. Kleine Installation nach einem der Ansprüche 1 bis 5, **dadurch gekennzeichnet, dass** die kleine Installation (1) eine 3-50 Benützer bediente Kapazität mit der Reinigung des Abwassers der Häuser, Hotels und Öffentlicher Institutionen hat.

7. Kleine Installation nach einem der Ansprüche 1 bis 6, **dadurch gekennzeichnet, dass** das Material des Schlammsacks (71) wasserdurchlässig, vorzugsweise gewebtes Polypropylen, gewebtes Jute, vorzugsweise aus einem zerlegbaren Material ist.

## Revendications

1. Petite installation de l'efficacité agrandie pour le traitement de l'eau usée biologique contenant un espace anaérobe, un espace anoxique, un espace aérobe équipant d'un soufflage d'air de micro bulle, un espace de post-sédimentation et un
espace d'épaisseur de boue, où passages, sorties, pompes de levier d'air, barrages de débordement inférieurs et supérieurs sont situés entre ces espaces,
où
l'eau usée à clarifier arrive à l'espace anaérobe (2) de la petite installation (1) d'une manière de gravitation avec une entrée supérieure et l'eau usée passes à travers du filtrage cage (12) situé dans la partie supérieure de l'espace anaérobe (2), les fractions grumuleuses de l'eau usée sont désagrégées avec l'aide de l'air entretenant par la pompe de levier d'air (15), les fractions grumuleuses sont sédimentées sur le fond de l'espace anaérobe (2) et après le désagrément et la sédimentation l'eau usée coule du fond de l'espace anaérobe (2) au fond de l'espace anoxique (3) à travers d'une ouverture inférieure de passage (18) et après l'eau usée coule de l'espace anoxique (3) au fond de l'espace aérobe (4) à travers des pipes de passage (20) situés d'un moyen simétrique possédant d'une entrée supérieure et d'une sortie inférieure,
où l'eau usée mouve au dessus dans la section de l'espace saturée des micro bulles produites par le soufflage d'air de micro bulle (13) et coule à travers des deux ouvertures d'entrée (31) situées d'un moyen simétrique dans les murs inclinés (9) et à travers des pipes de passage (21) d'une section de triangle possédant d'une entrée supérieure et d'une sortie inférieure adaptant aux deux murs inclinés (9) de l'espace de post-sédimentation (5) au fond de l'espace de post-sédimentation (5) et dans cet espace de post-sédimentation (5) la boue avec de densité plus grande est sédimentée et la fraction de l'eau est située sur la fraction de la boue, et la boue est sucée de l'espace de post-sédimentation (5) d'une manière que le T-profil (30) possédant d'un amincissement (32) sur le pipe de sortie (14) et pénétrant à l'espace de post-sédimentation (5) ralentisse l'écoulement de l'eau sortante dans un cas donné à environ 3 litres/min., en conséquence la hauteur de la colonne d'eau augmente dans l'espace de post-sédimentation (5) et à cause de la pression augmentée de la colonne d'eau la pompe de levier d'air (16) livre l'eau à l'espace anaérobe (2) seulement dans le cas de petite quantité d'eau divergeant à deux directions sur la surface, tandis que dans le cas de plus large quantité d'eau l'eau bourbeuse coule à l'espace d'épaisseur de boue (6) à travers du coude à sucer de boue (29) possédant d'un niveau réglable qui assure un débordement plus haut et de l'espace d'épaisseur de boue (6) elle atteind l'espace de précipitation de boue (70) avec l'aide de la pompe de levier d'air (17) fonctionnante d'une capacité maximum d'environ 15 minutes/jour si de boue liquide est accumulée,
où la fraction liquide de la boue est filtrée à travers du sac à boue (71) perméable et elle coule à l'espace anaérobe (2) à travers du plateau de goutte (73) et à travers du séparateur de goutte (27) connectionné,
et le contenu sec de la boue est recueilli au sac à boue (71) où il commence à sécher,
en quoi la petite installation (1) a
une base circulaire, et son espace anaérobe (2), espace anoxique (3) et espace d'épaisseur de boue (6) sont établis près l'un de l'autre d'une manière qu'un mur latéral vertical de chaque de ces trois espaces est muni d'un mur latéral (36) et l'espace de post-sédimentation (5) possédant d'un périmètre formé comme un triangle équilatéral le long de son bords supérieurs est formé d'une manière que son mur vertical est aménagé du mur latéral (36) et chaque des deux plaques latérales suivantes est aménagé d'un mur incliné (9) de triangle,
et l'espace aérobe (4) est aligné autour de l'espace de post-sédimentation (5) d'une manière que l'espace aérobe (4) est situé près de deux côtés et sous l'espace de post-sédimentation (5), l'espace d'épaisseur de boue (6) et l'espace anoxique (3) de la petite installation (1) sont interconnectionnés avec une ouverture de débordement supérieure (19) qui assure que l'eau retourne à l'espace anoxique (3) à travers de l'ouverture de débordement supérieure (19) et si la pompe de levier d'air (16) livre trop de boue à l'espace d'épaisseur de boue (6) à cause du surcharge de la petite installation (1),
dans le dessin du boucle re recirculation interne de la petite installation (1) il y a une fin de pipe (35) au point le plus haut du pipe de la pompe de levier d'air (28) assurant que l'eau usée puisse retourner à l'espace anoxique (3) de l'espace aérobe (4) et assurant que l'air puisse sortir,
l'eau bourbeuse est levée du fond de l'espace de post-sédimentation (5) par une pompe de levier d'air (16), et elle est livrée à deux endroits, à l'espace anaérobe (2), c'est-à-dire au filtrage cage (12) et à l'espace d'épaisseur de boue (6), dans ce dernier cas, un niveau de décharge réglable consistant d'un coude à sucer de boue (29) fait d'un pipe de coude de 90 degrée tourné un peu en haut empêche que l'eau puisse couler hors de la fin du pipe de coude dans le cas d'un niveau d'eau normal et couler à l'espace d'épaisseur de boue (6),
dans le cas d'un niveau d'eau normal le niveau d'eau dans l'espace de post-sédimentation (5) est en accord avec du niveau du fond du pipe de sortie (14), comme c'est écrit au dessus, pas de boue est livrée de la pompe de levier d'air (16) à l'espace d'épaisseur de boue (6) dans ces circonstances, parce que le niveau d'eau est trop bas dans le pipe à couler sur le bord du coude à sucer de boue (29),
quand une grande quantité d'eau usée arrive à la petite installation (1), le niveau d'eau commence à augmenter dans l'espace de post-sédimentation (5), parce que l'étouffe (32) ne permet pas passer assez de liquide à maintenir un niveau d'eau constant ici, le niveau d'eau peut augmenter jusqu'à il atteinde la fin tournée supérieure du T-profil (30), où l'eau se dégorge et passe au pipe de sortie (14), mais l'augmentation du niveau d'eau augmente le niveau d'eau aussi dans la pompe de levier d'air, par conséquent la boue coule aussi à l'espace d'épaisseur de boue (6) à travers du coude à sucer de boue (29) réglable où elle devient plus compact d'une manière gravitationnelle, dans le cas d'un niveau d'eau convenable, l'eau plus propre au surface coule de cet espace à travers de l'ouverture de débordement supérieure (19) à l'espace anoxique (3), par conséquent l'espace d'épaisseur de boue (6) ne peut pas être trop rempli.

2. Petite installation selon la revendication 1, **caractérisé en ce que**, les proportions de volume des espaces de la petite installation (1) sont déterminées ainsi que le volume 100% consiste de 7% à l'espace anaérobe (2), 16,2% à l'espace anoxique (3), 54,2% à l'espace aérobe (4), 15,6% à l'espace de post-sédimentation (5), 7% à l'espace d'épaisseur de boue (6) et comme ça une petite installation (1) construisant à servir 6 personnes a les volumes suivants:
l'espace anaérobe (2) = 0,1m³, l'espace anoxique (3) = 0,23m³, l'espace aérobe (4) = 0,77m³, l'espace de post-sédimentation (5) = 0,22m³, l'espace d'épaisseur de boue (6) = 0,1m³.

3. Petite installation selon les revendications 1 ou 2, **caractérisé en ce que**, le matériau de la petite installation (1) est plastique, préférablement il est fait d'une plaque de polypropylène de 6-8mm soudé avec une technologie de soudage de plastique connue et son matériau peut être d'acier inoxydable ou de polyester.

4. Petite installation selon l'une des revendications 1-3, **caractérisé en ce que**, une portion de la boue stable est éliminée régulièrement, en conséquence de ça le chargement de boue du système est considérablement plus petit et le soufflage d'air de micro bulle (13) exigeant dans l'espace aérobe (4) peut avoir une capacité plus petite.

5. Petite installation selon l'une des revendications 1-4, **caractérisé en ce que**, le réservoir de boue (7,8) peut être situé en dehors de la petite installation (1) aussi dans son immédiat voisinage.

6. Petite installation selon l'une des revendications 1-5, **caractérisé en ce que**, la petite installation (1) a une capacité à servir 3-50 utilisateurs par purifiant de l'eau usée sanitaire des maisons de famille, hôtels et établissemnets publics.

7. Petite installation selon l'une des revendications 1-6, **caractérisé en ce que**, le matériau du sac à boue (71) est du matériau perméable à l'eau, préférablement du polypropylène tissé, du jute tissé, préférablement il est fait d'un matériau qui peut se décomposer.
